# EUROPEAN PATENT APPLICATION

(11) **EP 2 940 770 A1**
(43) Date of publication of application: **04.11.2015**
(21) Application number: 13868662.1
(22) Date of filing: 14.08.2013
(51) Int. Cl.: H01M 8/04, H01M 8/06, F02C 3/00

(54) **POWER GENERATION SYSTEM**

(30) Priority: 28.12.2012 KR 20120155701
(71) Applicant: Posco Energy Co. Ltd., Seoul 135-777 (KR)
(72) Inventor: KIM, Byung Jun, Daejeon 302-755 (KR); KIM, Dong Eun, Daegu 704-967 (KR); KIM, Soo Taek, Pohang-si Gyeongsangbuk-do 791-782 (KR); PARK, Yong Su, Miryang-si Gyeongsangnam-do 627-751 (KR)
(74) Representative: Patentanwälte Ruff, Wilhelm, Beier, Dauster & Partner mbB
(86) International application number: PCT/KR2013/007329
(87) International publication number: WO 2014/104526

(57) **Abstract**

A power generation system which generates electric power includes a fuel cell system in which supplied reactants react to generate electric power and a circulation system that circulates a product generated by the fuel cell system. The circulation system is configured to resupply at least some elements of the product generated by the fuel cell system as a reactant of the fuel cell system.

## Description

### TECHNICAL FIELD

The inventive concept relates to a power generation system, and more particularly, to a power generation system which generates electric power and includes a fuel cell system in which supplied reactants react to generate electric power and a circulation system configured to circulate a product generated by the fuel cell system and resupply at least a portion of the product generated by the fuel cell system as a reactant of the fuel cell system.

### BACKGROUND ART

A fuel cell is a device that converts chemical energy stored in a hydrocarbon fuel into electric energy through an electrochemical reaction. In general, a fuel cell includes an anode and a cathode separated by an electrolyte that conducts an electric current to electrically charged ions. A molten carbonate fuel cell operates as a reactant fuel gas passes through the anode, while a gas containing carbon dioxide is oxidized, and oxygen passes through the cathode.

When the fuel cell is used, a certain product may be emitted as the reactant fuel gas reacts. The product, however, contains a large amount of carbon dioxide that is responsible for global warming and atmospheric changes and thus the environment is badly influenced by this product. Accordingly, it is important to collect and process carbon dioxide so as to supply and use the fuel cell.

### DETAILED DESCRIPTION OF THE INVENTIVE CONCEPT

### TECHNICAL PROBLEM

The inventive concept provides a power generation system which generates electric power and includes a fuel cell system in which supplied reactants react to generate electric power and a circulation system configured to circulate a product generated by the fuel cell system and resupply at least a portion of the product as a reactant of the fuel cell system.

### TECHNICAL SOLUTION

According to an aspect of the inventive concept, a power generation system which generates electric power includes a fuel cell system in which supplied reactants react to generate electric power; and a circulation system for circulating a product generated by the fuel cell system, wherein the circulation system resupplies at least a portion of the product generated by the fuel cell system as a reactant of the fuel cell system.

The fuel cell system may include an anode in which the reactants react, and a cathode. Hydrogen may be supplied to the anode and oxygen and carbon dioxide may be supplied to the cathode.

The circulation system may include a separator for separating at least a portion of the product generated by the fuel cell system and resupplying that as a reactant of the fuel cell system.

The separator may separate carbon dioxide from the product generated by the fuel cell system and resupply the carbon dioxide to the fuel cell system.

The separator may be a phase separator using a boiling point difference.

The power generation system may further include a combustion system, and the combustion system may be located at a rear end of the fuel cell system, and in which oxygen and hydrogen included in the product react to generate water and carbon dioxide.

The combustion system may be a catalyst combustion system using a predetermined catalyst.

The power generation system may further include a turbine power generation system including a turbine and configured to generate electric power by rotating the turbine. The turbine power generation system may be located at a rear end of the combustion system and generate electric power by rotating the turbine using at least one of the water and the carbon dioxide generated by the combustion system.

The power generation system may further include a heat exchanger for exchanging heat of the product generated by the combustion system with external heat.

### ADVANTAGEOUS EFFECTS

A power generation system according to an embodiment of the inventive concept includes a fuel cell system and a circulation system and may thus reuse a product generated by the fuel cell system as a reactant thereof. Thus, an overall power generation efficiency of the power generation system may be improved, and a product that may be an environmental pollution factor may be prevented from being emitted. For example, when the circulation system re-circulates carbon dioxide contained in the product generated by the fuel cell system, carbon dioxide that is responsible for global warming may be suppressed from being emitted, thereby suppressing generation of a pollutant.

Also, a power generation system according to an embodiment of the inventive concept includes a circulation system with a separator and may thus greatly increase an efficiency of recycling a product generated from a fuel cell. Since carbon dioxide may be separated and reused, an environmental pollution may be prevented.

Also, a power generation system according to an embodiment of the inventive concept includes a fuel cell system and a turbine power generation system and may be thus embodied as a hybrid power generation system. Thus, electric power may be generated by a turbine using a high-temperature product generated from a fuel cell while electric power is generated using the fuel cell, thereby greatly increasing the amount of electric power and an efficiency of energy utilization.

Also, a power generation system according to an embodiment of the inventive concept includes a heat exchanger and thus an overall energy utilization efficiency of the power generation system may be greatly increased.

### DESCRIPTION OF THE DRAWINGS

FIG. 1 is a conceptual diagram of a power generation system according to an embodiment of the inventive concept; and
FIG. 2 is a circuit diagram of a power generation system according to an embodiment of the inventive concept.

### BEST MODE

A power generation system that generates electric power according to an embodiment of the inventive concept includes a fuel cell system in which supplied reactants react to generate electric power and a circulation system that circulates a product generated by the fuel cell system. The circulation system is configured to resupply at least a portion of the product generated by the fuel cell system as a reactant of the fuel cell system.

### MODE OF THE INVENTIVE CONCEPT

Hereinafter, exemplary embodiments of the inventive concept will be described with reference to the accompanying drawings. The inventive concept is not, however, limited by these exemplary embodiments.

The advantages and features of the inventive concept and methods of achieving them will become apparent and more readily appreciated from the following description of the exemplary embodiments, taken in conjunction with the accompanying drawings. The inventive concept may, however, be embodied in many different forms and should not be construed as being limited to the embodiments set forth herein. Rather, these embodiments are provided so that this disclosure will be thorough and complete and will fully convey the concept of the inventive concept to those of ordinary skill in the art. The scope of the inventive concept is defined in the claims and their equivalents. The same reference numerals represent the same elements throughout the detailed description.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which the inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

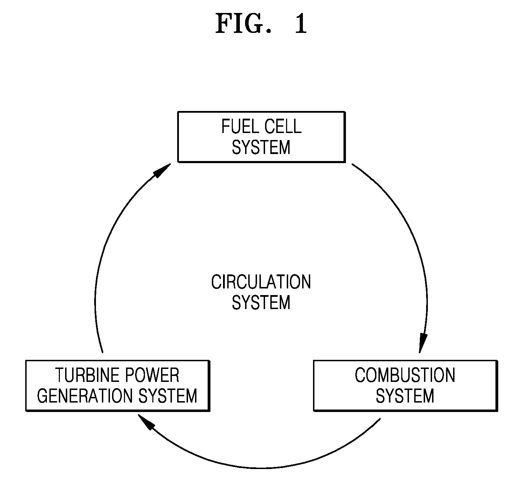

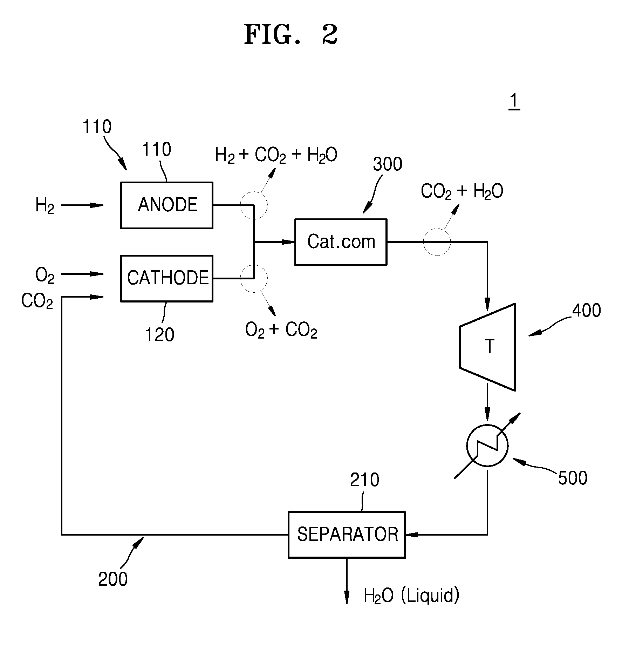

FIG. 1 is a conceptual diagram of a power generation system 1 according to an embodiment of the inventive concept. FIG. 2 is a circuit diagram of the power generation system 1 according to an embodiment of the inventive concept.

The power generation system 1 according to an embodiment of the inventive concept is configured to generate electric power and may include a fuel cell system 100 in which reactants react to generate electric power and a circulation system 200 which circulates a product generated by the fuel cell system 100. The circulation system 200 is configured to resupply at least a portion of the product generated by the fuel cell system 100 as a reactant of the fuel cell system 100.

The fuel cell system 100 may be a system which generates electric energy from chemical energy through a reaction of predetermined reactants. That is, the fuel cell system 100 is a system that generates electric energy from chemical energy generated when a reactant used as a fuel is oxidized. A product may be generated as the reactants react. The product may be, for example, a gas.

Here, the product should be understood as a concept including not only a material generated as the reactants react in the fuel cell system 100 but also residues of the reactants that did not react and are thus emitted as the efficiency of reaction is not 100%, i.e., a concept including all materials emitted from the fuel cell system 100.

The fuel cell system 100 may include an anode 110, a cathode 120, and an electrolyte present between the anode 110 and the cathode 120. The fuel cell system 100 may embodied as various systems, e.g., a phosphoric acid fuel cell system, a molten carbonate fuel cell system, a solid electrolyte fuel cell system, a solid polymer fuel cell system, etc., according to the type of the electrolyte. In the present disclosure, the fuel cell system 100 according to an embodiment of the inventive may be a molten carbonate fuel cell system.

The anode 110 acts as a fuel electrode to which a predetermined fuel among reactants is supplied. The fuel may be, for example, hydrogen. The cathode 120 may act as an oxide electrode to which oxygen and carbon dioxide among the reactants are supplied. Thus, the fuel cell system 100 according to an embodiment of the inventive concept may be a pure oxygen combustion apparatus using pure oxygen.

Hydrogen may be injected into the anode 110 to generate electrons through an oxidation reaction, and oxygen and carbon dioxide may be supplied into the cathode 120 to generate carbonate ions.

The carbonate ions may move from the cathode 120 to the anode 110 through the electrolyte present between the anode 110 and the cathode 120. Here, in the anode 110, the carbonate ions provided from the cathode 120 may react with hydrogen to generate water and carbon dioxide. Here, the water should be understood as including not only a liquid state but also a gaseous state, e.g., vapor, and the state of the water is not limited. Electric power may be generated as electric current flows through the electrons generated in the anode 110 when the electrons pass through an external circuit.

As described above, since the efficiency of reaction of the fuel cell system 100 is not 100%, a product passing through the fuel cell system 100 may include water generated when hydrogen, oxygen, and carbon dioxide which are reactants react with one another, carbon dioxide, and residual hydrogen and oxygen that did not react and thus remain. That is, the product may include hydrogen, oxygen, water, and carbon dioxide.

The circulation system 200 is configured to circulate the product and resupply at least a portion of the product generated in the fuel cell system 100 as a reactant of the fuel cell system 100.

That is, at least a portion of the product generated in the fuel cell system 100 may be circulated to be re-used as a reactant of the fuel cell system 100.

For example, the circulation system 200 may separate carbon dioxide from the product and resupply the carbon dioxide as a reactant of the fuel cell system 100.

Since the power generation system 1 according to an embodiment of the inventive concept includes the fuel cell system 100 and the circulation system 200, the product generated by the fuel cell system 100 may be reused as a reactant of the fuel cell system 100. Thus, an overall power generation efficiency of the power generation system 1 may be improved and the product that may be an environmental pollution factor may be prevented from being emitted. For example, as described above, when the circulation system 200 re-circulates carbon dioxide contained in the product of the fuel cell system 100, carbon dioxide which is responsible for global warming may be suppressed from being emitted, thereby suppressing generation of a pollutant.

According to an embodiment of the inventive concept, the circulation system 200 may include a separator 210 that separates elements from the product generated in the fuel cell system 100, and the circulation system 200 may be configured to resupply the elements separated from the product by the separator 210 as reactants of the fuel cell system 100.

The separator 210 may be a phase separator and may separate elements from the product. For example, the separator 210 may separate carbon dioxide and water from the product by using the difference between boiling points of the carbon dioxide and the water. The carbon dioxide and the water are separated from the product by the separator 210, and the circulation system 200 may resupply the carbon dioxide to the cathode 120 of the fuel cell system 100. In this case, the separator 210 may further include elements for separating oxygen and hydrogen, and provide the separated oxygen and hydrogen to the anode 110 and the cathode 120, respectively.

Since the power generation system 1 according to an embodiment of the inventive concept includes the circulation system 200 with the separator 210, the efficiency of recycling a product generated from a fuel cell may be greatly increased. As described above, carbon dioxide may be separated and reused, thereby preventing environmental pollution.

According to an embodiment of the inventive concept, the power generation system 1 may further include a combustion system 300. In The combustion system 300, the hydrogen and oxygen contained in the product react to generate carbon dioxide and water.

That is, as described above, since the efficiency of reaction of the fuel cell system 100 is not 100%, residues of oxygen and hydrogen used as reactants may remain and be thus contained in a product. Thus, the combustion system 300 in which residues of oxygen and hydrogen react to generate carbon dioxide and vapor from the residues of oxygen and hydrogen.

The combustion system 300 may be installed at a rear end of the fuel cell system 100 and may cause non-reacted oxygen and hydrogen to react to generate carbon dioxide and vapor.

The combustion system 300 may be embodied as a catalyst combustion system using a predetermined catalyst.

According to an embodiment of the inventive concept, the power generation system 1 may further include a turbine power generation system 400. The turbine power generation system 400 generates electric power by rotating a turbine using a product generated by the combustion system 300.

When residues of oxygen and hydrogen that did not react in the fuel cell system 100 and thus remain in the product are burnt by the combustion system 300, water and carbon dioxide are generated. In this case, since the water and the carbon dioxide are generated by the combustion system 300, the carbon dioxide may be in a gaseous state having high-temperature heat energy and the water may be emitted in the form of high-temperature and high-pressure vapor. Thus, the turbine power generation system 400 may be further installed to generate electric power from the heat energies of the carbon dioxide and the water that are in the gaseous state. The turbine power generation system 400 may be installed at a rear end of the combustion system 300 and generate electric energy by rotating a turbine using the carbon dioxide and the water that are in the high-temperature gaseous state.

As described above, the power generation system 1 according to an embodiment of the inventive concept includes the fuel cell system 100 and the turbine power generation system 400 and may be thus embodied as a hybrid power generation system. Thus, electric power may be generated using not only a fuel cell but also a turbine that uses a high-temperature product generated by the fuel cell, thereby greatly increasing the amount of electric power and the efficiency of using energy.

According to an embodiment of the inventive concept, the power generation system 1 may further include a heat exchanger 500 that collects at least a portion of heat energy of a product generated by the fuel cell system 100.

The heat exchanger 500 may be connected to the circulation system 200 so as to exchange heat of the product of the fuel cell system 100 circulated by the circulation system 200 with external heat.

For example, the heat exchanger 500 may be installed at a rear end of the turbine power generation system 400 to exchange heat of a gas passing through the turbine power generation system 400 with external heat. That is, vapor and carbon dioxide generated when oxygen and hydrogen are burnt by the combustion system 300 are high-temperature gases and may be thus used to generate electric power by the turbine power generation system 400. Also, the heat exchanger 500 configured to exchange heat energy of a gas passing through the turbine power generation system 400 with external heat may be installed to use the heat energy of the gas. The heat exchanger 500 may have, for example, a pipe structure to use the exchanged heat for heating or the like.

By installing the heat exchanger 500, the overall energy utilization efficiency of the power generation system 1 according to an embodiment of the inventive concept may be greatly increased.

While the inventive concept has been particularly shown and described with reference to exemplary embodiments thereof, it will be understood that various changes in form and details may be made therein without departing from the spirit and scope of the following claims.

## Claims

1. A power generation system which generates electric power, the power generation system system comprising:
a fuel cell system in which supplied reactants react to generate electric power; and
a circulation system for circulating a product generated by the fuel cell system,
wherein the circulation system resupplies at least a portion of the product generated by the fuel cell system as a reactant of the fuel cell system.

2. The power generation system of claim 1, wherein the fuel cell system comprises an anode and a cathode where the reactants react,
wherein hydrogen is supplied to the anode, and
oxygen and carbon dioxide are supplied to the cathode.

3. The power generation system of claim 1, wherein the circulation system comprises a separator for separating at least a portion of the product generated by the fuel cell system and resupply the at least the portion as a reactant of the fuel cell system.

4. The power generation system of claim 3, wherein the separator separates carbon dioxide from the product generated by the fuel cell system and resupplies the carbon dioxide to the fuel cell system.

5. The power generation system of claim 4, wherein the separator is a phase separator operating according to a boiling point difference.

6. The power generation system of claim 1, further comprising a combustion system,
wherein the combustion system is located at a rear end of the fuel cell system and in which oxygen and hydrogen included in the product react to generate water and carbon dioxide.

7. The power generation system of claim 6, wherein the combustion system is a catalyst combustion system using a predetermined catalyst.

8. The power generation system of claim 6, further comprising a turbine power generation system including a turbine and configured to generate electric power by rotating the turbine,
wherein the turbine power generation system is located at a rear end of the combustion system and generates electric power by rotating the turbine using at least one of the water and the carbon dioxide generated by the combustion system.

9. The power generation system of claim 1, further comprising a heat exchanger for exchanging heat of the product generated by the combustion system with external heat.
